# EUROPEAN PATENT APPLICATION

(11) **EP 4 667 983 A1**
(43) Date of publication of application: **24.12.2025**
(21) Application number: 23922856.2
(22) Date of filing: 25.10.2023
(51) Int. Cl.: G02B 5/18, G01J 3/18

(54) **DIFFRACTION GRATING AND ANALYSIS DEVICE USING SAME, AND METHOD FOR MANUFACTURING DIFFRACTION GRATING**

(30) Priority: 17.02.2023 JP 2023023453
(71) Applicant: HITACHI HIGH-TECH CORPORATION, Tokyo 105-6409 (JP)
(72) Inventor: AONO Takanori, Tokyo 100-8280 (JP); YAEGASHI Kenta, Tokyo 105-6409 (JP); EBATA Yoshisada, Tokyo 105-6409 (JP); UCHIDA Isao, Tokyo 100-8280 (JP)
(74) Representative: Mewburn Ellis LLP
(86) International application number: PCT/JP2023/038445
(87) International publication number: WO 2024/171522

(57) **Abstract**

Provided is a diffraction grating having grating grooves finer than a processable limit of existing semiconductor processing or machining. A diffraction grating to be mounted on an analysis device, in which a diffraction grating pattern formed on a substrate is transferred onto a heat-shrinkable resin, the heat-shrinkable resin is heated and caused to shrink, and the diffraction grating pattern on the heat-shrinkable resin thus shrunk is transferred onto a transparent resin or a metal film.

## Description

### Technical Field

The present invention relates to a structure of a diffraction grating and a method of manufacturing a diffraction grating, and, in particular, relates to a technique effective in an application to a diffraction grating having a microstructure finer than a wavelength of light.

### Background Art

Diffraction gratings for spectrally dispersing various types of light ranging from soft X-rays to far-infrared rays are used in many fields, as indispensable optical elements for spectrometers. For example, a diffraction grating installed in a spectroscopic analysis device separates light at a specific wavelength, and guides the light to a detector. After a specimen is irradiated with light from a light source, the diffraction grating spectrally disperses the light into light at respective wavelengths, and the light absorbed by the specimen is detected on the basis the light intensities. Conventionally, such a diffraction grating has been manufactured by transferring a mold fabricated by mechanically cutting a substrate or holographically exposing a substrate, onto a resin or metal.

As a background art of the present technical field, for example, there is a technique disclosed in PTL 1. PTL 1 discloses "a method of manufacturing a diffraction grating polarizer, the method enabling large-area diffraction grating polarizers to be obtained stably and easily".

In PTL 1, in order to achieve a finer grating, an external force is applied a light-transmitting resin film on which parallel grooves are formed periodically at a fine pitch, so that a narrower groove pitch is achieved. By bonding a heat-shrinkable resin onto the rear surface of the diffraction grating polarizer, and causing the heat-shrinkable resin to shrink, such an external force is applied to the diffraction grating polarizer, and a narrower groove pitch is achieved.

Furthermore, PTL 2 discloses a "method of manufacturing a volume-changing resin-molded product that contains water-absorbent polymer resin, that has a high volume change modulus, the mold of which can be easily made, that is easily moldable, and that enables micro-processing".

In PTL 2, a mold is fabricated by forming the pattern of an optical element on water-absorbing polymer resin, and by allowing the moisture to volatilize, so that the polymer resin shrinks and miniaturizes. By then transferring the pattern on the mold to a thermosetting resin, an optical element with a fine optical element pattern is fabricated.

Furthermore, PTL 3 discloses a "microstructure transfer method capable of transferring a mold microstructure onto a resin base member with a simple process".

In PTL 3, a solvent is applied to a surface of a mold having a microstructure, and a resin base member is brought into contact with the solvent on the mold. The resin base member is then peeled off from the mold.

### Citation List

### Patent Literatures

PTL 1: JP H11-160534 A
PTL 2: JP 2003-161813 A
PTL 3: JP 2007-125799 A

### Summary of Invention

### Technical Problem

In diffraction gratings such as those described above, it is difficult to manufacture a fine grating due to the limit in resolution or the processable limit of photolithography, etching, or mechanical cutting in the semiconductor processing.

Diffraction gratings with sub-wavelength structure (SWS) finer than wavelengths of light are expected to exhibit high diffraction efficiency, but such gratings require extremely fine structures. In particular, for the purpose of manufacturing a SWS for spectrally dispersing the light within the visible range used for medical and biological analysis, even with the use of the state-of-the-art semiconductor processing, the resolution falls short.

In the technique according to PTL 1 described above, a fine optical element can be formed by bonding a heat-shrinkable resin to a resin on which the optical element is formed, and causing the resin to shrink. However, such an optical element is susceptible to warpage due to a difference in the shrinkage factor between the resin on which the optical element is formed, and the heat-shrinkable resin.

In the technique according to PTL 2, a fine optical element can be formed by allowing the moisture to volatilize from the water-absorbent polymer resin on which the optical element is formed. However, because the shrinkage factor changes when the amount of moisture to be volatilized is adjusted, the dimensions of the optical elements are prone to vary.

With the technique according to PTL 3, it is difficult to fabricate a structure finer than the microstructure of the mold.

Therefore, an object of the present invention is to provide a diffraction grating having grating grooves finer than a processable limit with existing semiconductor processing or machining, an analysis device using the diffraction grating, and a method of manufacturing a diffraction grating.

### Solution to Problem

In order to address the issues described above, the present invention is a diffraction grating to be mounted on an analysis device, characterized in that a diffraction grating pattern formed on a substrate is transferred onto a heat-shrinkable resin, the heat-shrinkable resin is heated and caused to shrink, and the diffraction grating pattern on the heat-shrinkable resin thus shrunk is transferred onto a transparent resin or a metal film.

Furthermore, the present invention is a diffraction grating to be mounted on an analysis device, characterized in that a diffraction grating pattern on a substrate is transferred onto a heat-shrinkable resin, the heat-shrinkable resin is heated and caused to shrink, a mold is formed by transferring the diffraction grating pattern on the heat-shrinkable resin thus shrunk is onto a metal, and the diffraction grating pattern on the mold is transferred onto a transparent resin or a metal film.

Furthermore, the present invention is characterized by including: a step (a) of forming a diffraction grating pattern on a substrate; a step (b) of dissolving a surface of a heat-shrinkable resin using a first solvent, and transferring the diffraction grating pattern on the substrate to the surface of the heat-shrinkable resin by bringing the diffraction grating pattern on the substrate into contact with and applying a load to the dissolved surface of the heat-shrinkable resin; a step (c) of peeling off the diffraction grating pattern on the substrate from a surface of the heat-shrinkable resin; a step (d) of heating and shrinking the heat-shrinkable resin having the surface onto which the diffraction grating pattern on the substrate has been transferred; a step (e) of dissolving a surface of a transparent resin in a second solvent, and transferring the diffraction grating pattern on the heat-shrinkable resin onto the surface of the transparent resin by bringing a diffraction grating pattern on the heat-shrinkable resin into contact with and applying a load to the dissolved surface of the transparent resin; and a step (f) of peeling off the diffraction grating pattern on the heat-shrinkable resin from the surface of the transparent resin.

Furthermore, the present invention is characterized by including: a step (a) of forming a diffraction grating pattern on a substrate; a step (b) of dissolving a surface of a heat-shrinkable resin using a first solvent, and transferring the diffraction grating pattern on the substrate to the surface of the heat-shrinkable resin by bringing the diffraction grating pattern on the substrate into contact with and applying a load to the dissolved surface of the heat-shrinkable resin; a step (c) of peeling off the diffraction grating pattern on the substrate from a surface of the heat-shrinkable resin; a step (d) of heating and shrinking the heat-shrinkable resin having the surface onto which the diffraction grating pattern on the substrate has been transferred; a step (e) of plating the diffraction grating pattern on the heat-shrinkable resin; a step (f) of peeling off a metal mold formed at the step (e) from the diffraction grating pattern on the heat-shrinkable resin; a step (g) of dissolving a surface of a transparent resin in a second solvent, and transferring the diffraction grating pattern on the metal mold onto the surface of the transparent resin by bringing a diffraction grating pattern on the metal mold into contact with and applying a load to the dissolved surface of the transparent resin; and a step (h) of peeling off the diffraction grating pattern on the metal mold from the surface of the transparent resin.

### Advantageous Effects of Invention

According to the present invention, it is possible to achieve a diffraction grating having a grating groove finer than the processable limit of existing semiconductor processing or machining, an analysis device using such a diffraction grating, and a method of manufacturing such a diffraction grating.

As a result, the diffraction efficiency of the diffraction grating can be improved, and the sensitivity of the analysis device can be improved.

Problems, configurations, and effects other than those described above will become clear in the following description of embodiments.

### Brief Description of Drawings

[FIG. 1] FIG. 1 is a perspective view illustrating a schematic configuration of a diffraction grating including ridges with a substantially oval profile according to the present invention.
[FIG. 2] FIG. 2 is a perspective view illustrating a schematic configuration of a diffraction grating including ridges with a substantially rectangular profile according to the present invention.
[FIG. 3] FIG. 3 is a perspective view illustrating a schematic configuration of a diffraction grating including ridges with a sawtooth-shaped profile according to the present invention.
[FIG. 4] FIG. 4 is a perspective view illustrating a schematic configuration of a diffraction grating including unequal-pitched ridges with a substantially rectangular profile according to the present invention.
[FIG. 5] FIG. 5 is a perspective view illustrating a schematic configuration of a concave diffraction grating including the ridges according to the present invention.
[FIG. 6] FIG. 6 is a diagram illustrating a schematic configuration of an analysis device according to a first embodiment of the present invention.
[FIG. 7] FIG. 7 is a diagram illustrating a schematic configuration of an analysis device according to a second embodiment of the present invention.
[FIG. 8] FIG. 8 is a diagram illustrating a method of manufacturing a diffraction grating according to a third embodiment of the present invention.
[FIG. 9] FIG. 9 is a diagram illustrating a method of manufacturing a diffraction grating according to a fourth embodiment of the present invention.
[FIG. 10] FIG. 10 is a diagram illustrating a method of manufacturing a diffraction grating according to a fifth embodiment of the present invention.
[FIG. 11] FIG. 11 is a diagram illustrating a method of manufacturing a diffraction grating according to a sixth embodiment of the present invention.
[FIG. 12] FIG. 12 is a flowchart illustrating a method of manufacturing a diffraction grating according to a seventh embodiment of the present invention.
[FIG. 13] FIG. 13 is a flowchart illustrating a method of manufacturing a diffraction grating according to an eighth embodiment of the present invention.

### Description of Embodiments

Embodiments of the present invention will now be explained with reference to drawings. In the drawings, the same components are denoted by the same reference numerals, and redundant detailed description will be omitted.

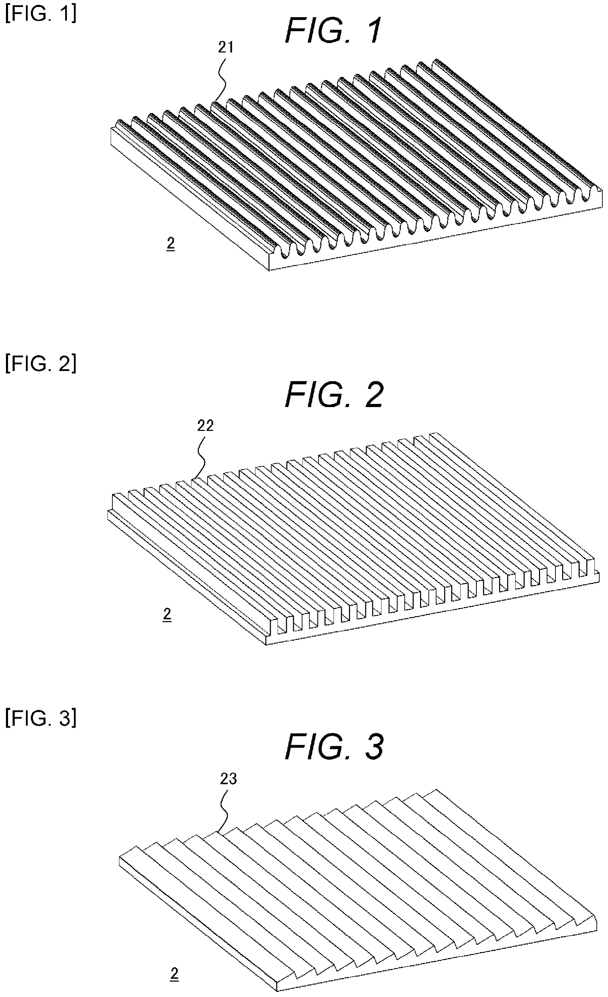

To begin with, a structure of a diffraction grating according to the present invention will be described with reference to FIGS. 1 to 5.

FIG. 1 is a perspective view illustrating a schematic configuration of a diffraction grating including ridges with a substantially oval profile according to the present invention.

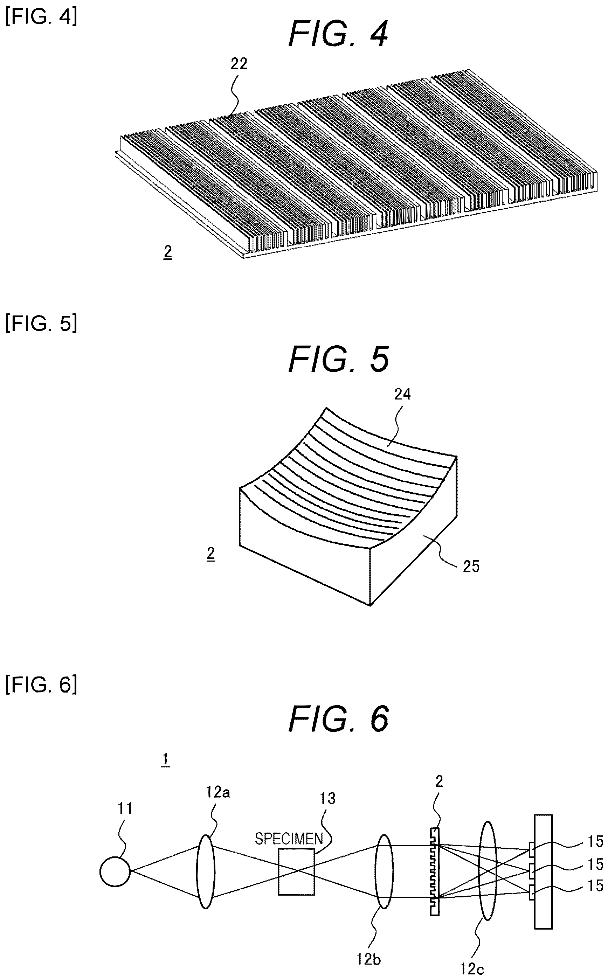

FIG. 2 is a perspective view illustrating a schematic configuration of a diffraction grating including ridges with a substantially rectangular profile according to the present invention. FIG. 3 is a perspective view illustrating a schematic configuration of a diffraction grating including ridges with a sawtooth-shaped profile according to the present invention. FIG. 4 is a perspective view illustrating a schematic configuration of a diffraction grating including unequal-pitched ridges with a substantially rectangular profile according to the present invention. FIG. 5 is a perspective view illustrating a schematic configuration of a concave diffraction grating including the ridges according to the present invention.

Diffraction gratings 2 according to the present invention includes ridges 21 having a substantially oval profile (FIG. 1), ridges 22 having a substantially rectangular profile (FIG. 2), or ridges 23 having a sawtooth-shaped profile (FIG. 3), arranged at an equal pitch or an unequal pitch (FIG. 4).

In transmission diffraction gratings, the ridges 21 to 23 are formed on a transparent material such as glass or acrylic resin. In reflection diffraction gratings, the ridges 21 to 23 are formed on a metal such as aluminum or gold having a high reflectivity. The wavelengths to be spectrally dispersed can be changed by changing factors such as the ridge size or the ridge angle.

In addition, by providing the ridges 21 to 23 having the profiles illustrated in FIGS. 1 to 4 as grating grooves 24 on a concave substrate 25, a diffraction grating capable of not only spectrally dispersing light but also condensing light can be achieved.

### First Embodiment

An analysis device according to a first embodiment of the present invention will now be described with reference to FIG. 6. FIG. 6 is a diagram illustrating a schematic configuration of this analysis device 1 according to this embodiment. Described in this embodiment is an analysis device using a transmission diffraction grating according to the present invention.

The analysis device 1 according to this embodiment is used for identification of a substance by detecting the light emitted from a specific substance, among chemical or biological substances, for example. As illustrated in FIG. 6, the analysis device 1 includes a light source 11, lenses 12a, 12b, 12c, a specimen chamber 13, a diffraction grating 2, and a plurality of detectors 15 that are arranged along a line.

The light from the light source 11 is condensed by the lens 12a, and a measurement target (specimen) inside the specimen chamber 13 is irradiated therewith. The light emitted from the specimen passes through the lens 12b, becomes incident on the diffraction grating 2, and is wavelength-dispersed and forms a spectrum. The spectrum thus formed is detected by the detectors 15, such as photodetectors or charge-coupled devices (CCD), through the lens 12c.

### Second Embodiment

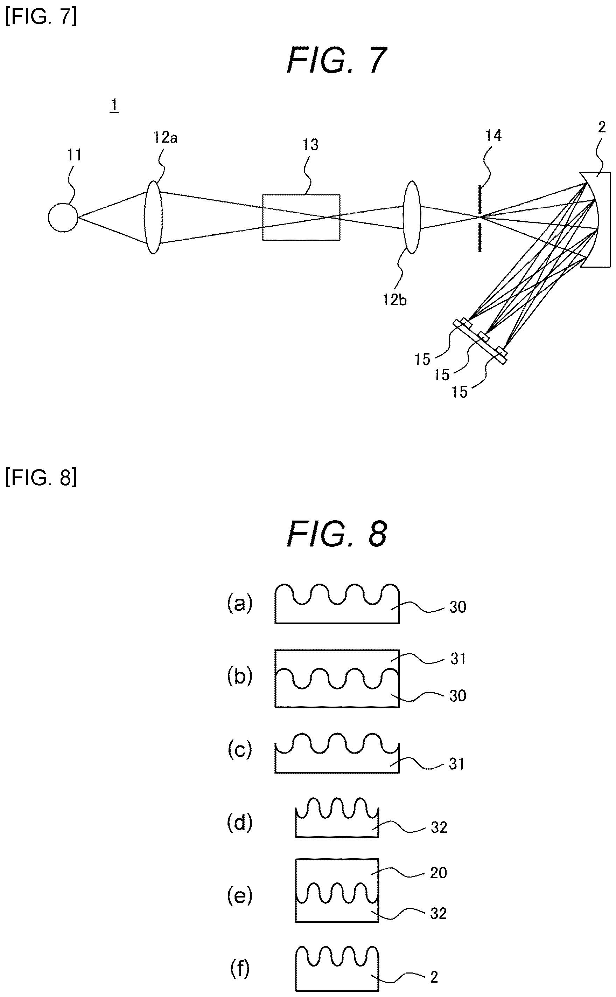

An analysis device according to a second embodiment of the present invention will be described with reference to FIG. 7. FIG. 7 is a diagram illustrating a schematic configuration of this analysis device 1 according to this embodiment. Described in this embodiment is an analysis device using a reflection diffraction grating according to the present invention.

The analysis device 1 according to this embodiment is used for measuring a concentration of a substance or identifying a substance, among chemical and biological substances, for example, by selectively absorbing light at a wavelength unique to the chemical bonding of the substance. As illustrated in FIG. 7, the analysis device 1 includes a light source 11, lenses 12a, 12b, a specimen chamber 13, a slit 14, a diffraction grating 2, and a plurality of detectors 15.

The light from the light source 11 is condensed by the lens 12a, and a measurement target inside the specimen chamber 13 is irradiated therewith. The lens 12b condenses the light having passed through the specimen chamber 13 to the opening of the slit 14. The light having passed through the slit 14 is wavelength-dispersed by the diffraction grating 2 and forms a spectrum. The spectrum thus formed is detected by the detectors 15.

A method of manufacturing a diffraction grating having a fine grating pattern will now be described with reference to FIGS. 8 to 13.

### Third Embodiment

A method of manufacturing a diffraction grating according to a third embodiment of the present invention will now be described with reference to FIG. 8. FIG. 8 is a diagram illustrating a method of manufacturing a diffraction grating according to this embodiment, and illustrates a cross-sectional view in each of steps (a) to (f).

To begin with, a diffraction grating substrate 30 is manufactured through photolithography and etching used in semiconductor processing (step (a)).

An organic solvent dissolving heat-shrinkable resin is then applied to the diffraction grating substrate 30, and a heat-shrinkable resin 31 is brought into contact with the organic solvent and a load is applied thereto (step (b)). The surface of the heat-shrinkable resin 31 therefore dissolves into the organic solvent, and goes into the diffraction grating pattern formed on the diffraction grating substrate 30. The organic solvent then volatilizes, and the diffraction grating pattern is formed on the surface of the heat-shrinkable resin 31 (step (c)).

As the heat-shrinkable resin 31, a resin formed by uniaxial stretching is preferably used.

The heat-shrinkable resin 31 having the diffraction grating thus formed is then heated, so that the resin itself shrinks. The shrunk diffraction grating substrate 32 with a diffraction grating pattern is thus fabricated (step (d)).

Next, an organic solvent not dissolving the heat-shrinkable resin but dissolving the transparent resin is applied to the surface of the shrunk diffraction grating substrate 32. The transparent resin 20 is then brought into contact therewith, and a load is applied thereto (step (e)).

In the manner described above, it is possible to manufacture the diffraction grating 2 by transferring the shrunk diffraction grating pattern onto the transparent resin 20 (step (f)). The diffraction grating pattern on the diffraction grating 2 manufactured in the manner described above may include a fine diffraction grating pattern having a grating width of 40 nm or less.

### Fourth Embodiment

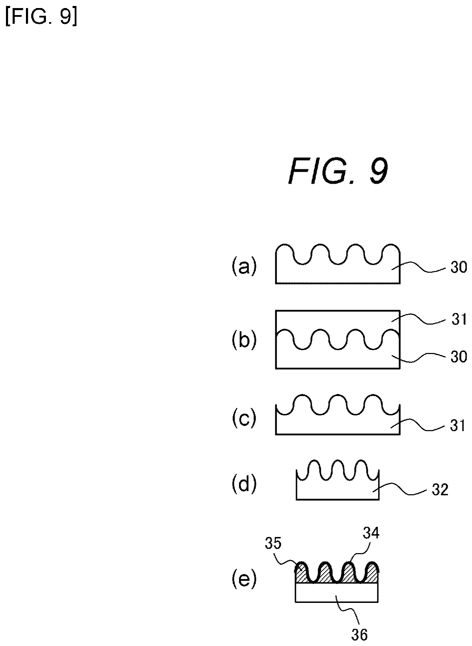

A method of manufacturing a diffraction grating according to a fourth embodiment of the present invention will now be described with reference to FIG. 9. FIG. 9 is a diagram illustrating a method of manufacturing a diffraction grating according to this embodiment, and illustrates a cross-sectional view in each of steps (a) to (e).

To begin with, a diffraction grating substrate 30 is manufactured through photolithography and etching used in semiconductor processing (step (a)).

An organic solvent dissolving heat-shrinkable resin is then applied to the diffraction grating substrate 30, and a heat-shrinkable resin 31 is brought into contact with the organic solvent and a load is applied thereto (step (b)). The surface of the heat-shrinkable resin 31 therefore dissolves into the organic solvent, and goes into the diffraction grating pattern formed on the diffraction grating substrate 30. The organic solvent then volatilizes, and the diffraction grating pattern is formed on the surface of the heat-shrinkable resin 31 (step (c)).

The heat-shrinkable resin 31 having the diffraction grating thus formed is then heated, so that the resin itself shrinks. The shrunk diffraction grating substrate 32 with a diffraction grating pattern is thus fabricated (step (d)).

Using the shrunk diffraction grating substrate 32 as a mold, the diffraction grating pattern is transferred to a metal film 34, to fabricate a diffraction grating 2 including the metal film 34, a resin 35, and a base 36 (step (e)).

### Fifth Embodiment

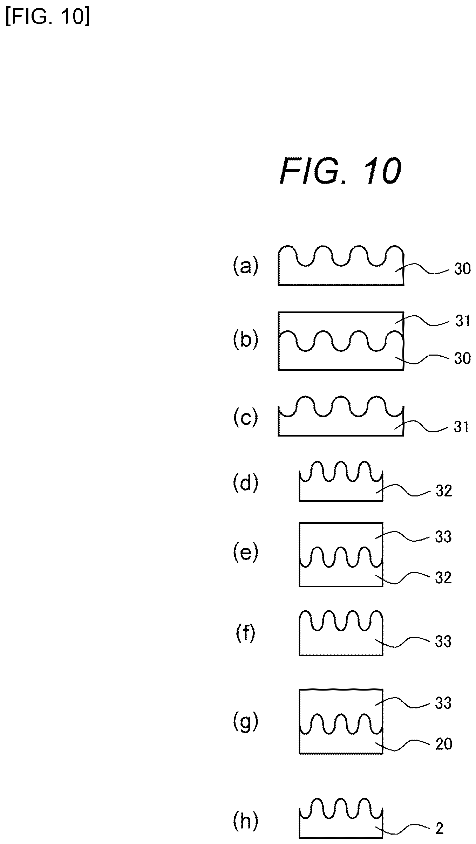

A method of manufacturing a diffraction grating according to a fifth embodiment of the present invention will now be described with reference to FIG. 10. FIG. 10 is a diagram illustrating a method of manufacturing a diffraction grating according to this embodiment, and illustrates a cross-sectional view in each of steps (a) to (h) .

To begin with, a diffraction grating substrate 30 is manufactured through photolithography and etching used in semiconductor processing (step (a)).

An organic solvent dissolving heat-shrinkable resin is then applied to the diffraction grating substrate 30, and a heat-shrinkable resin 31 is brought into contact with the organic solvent and a load is applied thereto (step (b)). The surface of the heat-shrinkable resin 31 therefore dissolves into the organic solvent, and goes into the diffraction grating pattern formed on the diffraction grating substrate 30. The organic solvent then volatilizes, and the diffraction grating pattern is formed on the surface of the heat-shrinkable resin 31 (step (c)).

The heat-shrinkable resin 31 having the diffraction grating thus formed is then heated, so that the resin itself shrinks. The shrunk diffraction grating substrate 32 with a diffraction grating pattern is thus fabricated (step (d)).

The diffraction grating pattern on the shrunk diffraction grating substrate 32 is then transferred onto metal by plating (step (e)), and the metal is peeled off. A metal mold 33 is thus fabricated (step (f)).

The pattern on the metal mold 33 is then transferred onto the transparent resin 20 (step (g)). To transfer the pattern on the mold 33 onto the transparent resin 20, thermal transfer, in which the surface of the transparent resin 20 is heated to soften and the mold 33 is pressed thereto, or transfer using a solvent, which is used in the third embodiment, is used.

Finally, the transparent resin 20 is peeled off from the metal mold 33, to fabricate the diffraction grating 2 (step (h)).

### Sixth Embodiment

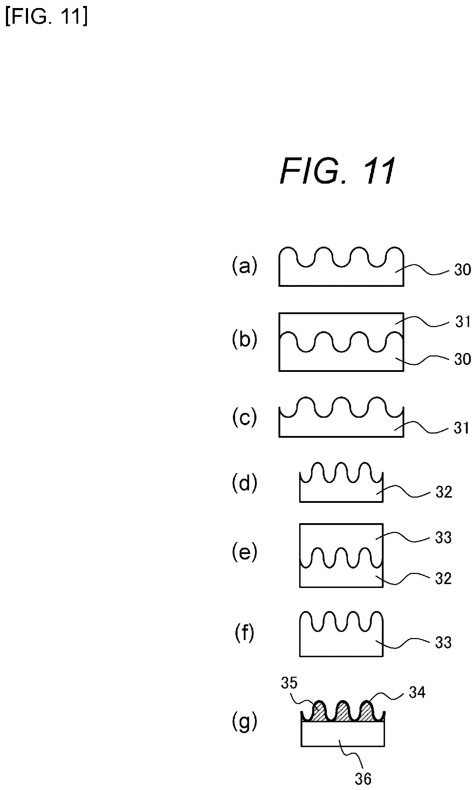

A method of manufacturing a diffraction grating according to a sixth embodiment of the present invention will now be described with reference to FIG. 11. FIG. 11 is a diagram illustrating a method of manufacturing a diffraction grating according to this embodiment, and illustrates a cross-sectional view in each of steps (a) to (g).

To begin with, a diffraction grating substrate 30 is manufactured through photolithography and etching used in semiconductor processing (step (a)).

An organic solvent dissolving heat-shrinkable resin is then applied to the diffraction grating substrate 30, and a heat-shrinkable resin 31 is brought into contact with the organic solvent and a load is applied thereto (step (b)). The surface of the heat-shrinkable resin 31 therefore dissolves into the organic solvent, and goes into the diffraction grating pattern formed on the diffraction grating substrate 30. The organic solvent then volatilizes, and the diffraction grating pattern is formed on the surface of the heat-shrinkable resin 31 (step (c)).

The heat-shrinkable resin 31 having the diffraction grating thus formed is then heated, so that the resin itself shrinks. The shrunk diffraction grating substrate 32 with a diffraction grating pattern is thus fabricated (step (d)).

The surface of the diffraction grating pattern on the shrunk diffraction grating substrate 32 is then plated (step (e)), and a metal mold 33 is fabricated (step (f)).

Using the shrunk diffraction grating substrate 32 as a mold, the grating pattern is transferred to a metal film 34, to fabricate a diffraction grating 2 including the metal film 34, a resin 35, and a base 36 (step (g)).

### Seventh Embodiment

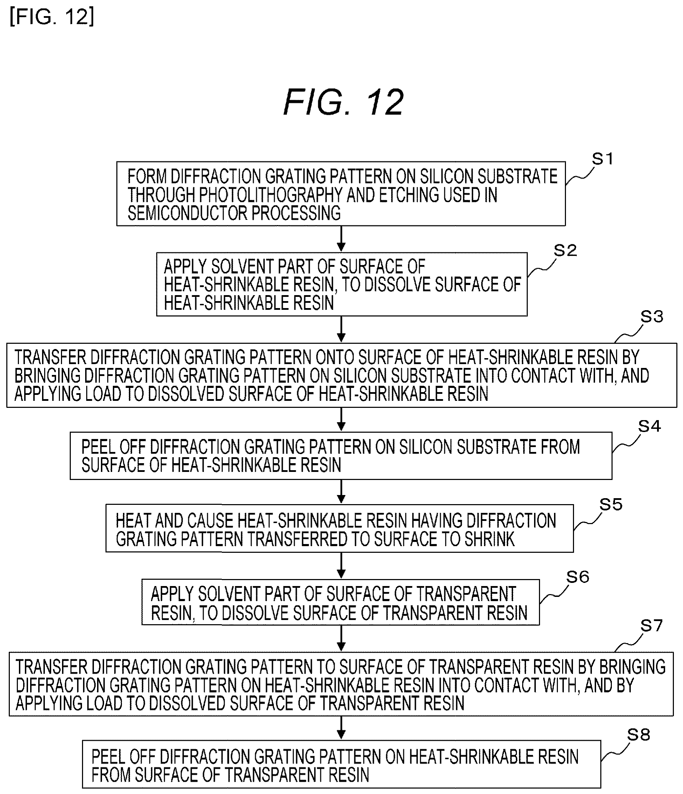

A method of manufacturing a diffraction grating according to a seventh embodiment of the present invention will now be described with reference to FIG. 12. FIG. 12 is a flowchart illustrating a method of manufacturing a diffraction grating according to this embodiment.

To begin with, a diffraction grating pattern is formed on a silicon substrate through photolithography and etching used in semiconductor processing (step S1).

A solvent is then applied to a part of the surface of heat-shrinkable resin, to dissolve the surface of the heat-shrinkable resin (step S2).

By then bringing the diffraction grating pattern on the silicon substrate into contact with the dissolved surface of the heat-shrinkable resin, and by applying a load, the diffraction grating pattern is transferred onto the surface of the heat-shrinkable resin (step S3).

The diffraction grating pattern on the silicon substrate is then peeled off from the surface of the heat-shrinkable resin (step S4).

The heat-shrinkable resin having the diffraction grating pattern transferred to the surface is then heated and caused to shrink (step S5).

A solvent is then applied to a part of the surface of transparent resin, to dissolve the surface of the transparent resin (step S6).

By then bringing the diffraction grating pattern on the heat-shrinkable resin into contact with the dissolved surface of the transparent resin and by applying a load, the diffraction grating pattern is transferred to the surface of the transparent resin (step S7).

Finally, the diffraction grating pattern on the heat-shrinkable resin is peeled off from the surface of the transparent resin (step S8).

### Eighth Embodiment

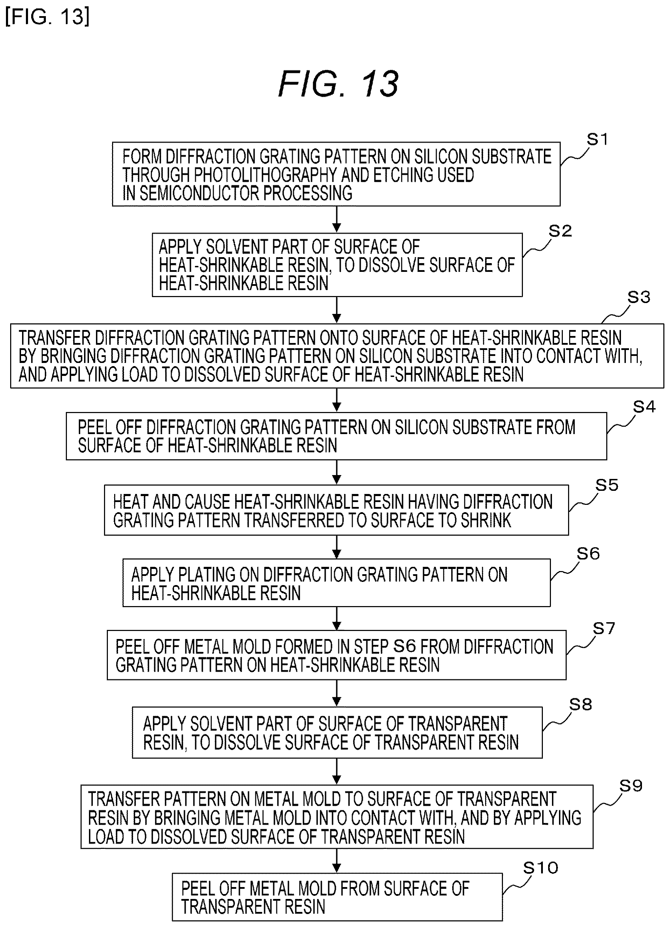

A method of manufacturing a diffraction grating according to an eighth embodiment of the present invention will now be described with reference to FIG. 13. FIG. 13 is a flowchart illustrating a method of manufacturing the diffraction grating according to this embodiment.

To begin with, a diffraction grating pattern is formed on a silicon substrate through photolithography and etching used in semiconductor processing (step S1).

A solvent is then applied to a part of the surface of heat-shrinkable resin, to dissolve the surface of the heat-shrinkable resin (step S2).

By then bringing the diffraction grating pattern on the silicon substrate into contact with the dissolved surface of the heat-shrinkable resin, and by applying a load, the diffraction grating pattern is transferred onto the surface of the heat-shrinkable resin (step S3).

The diffraction grating pattern on the silicon substrate is then peeled off from the surface of the heat-shrinkable resin (step S4).

The heat-shrinkable resin having the diffraction grating pattern transferred to the surface is then heated and caused to shrink (step S5).

The diffraction grating pattern on the heat-shrinkable resin is plated (step S6).

The metal mold formed in step S6 is then peeled off from the diffraction grating pattern on the heat-shrinkable resin (step S7).

A solvent is then applied to a part of the surface of transparent resin, to dissolve the surface of the transparent resin (step S8).

By then bringing the metal mold into contact with the dissolved surface of the transparent resin and by applying a load, the pattern on the metal mold is transferred to the surface of the transparent resin (step S9).

Finally, the metal mold is peeled off from the surface of the transparent resin (step S10).

As described above, with the diffraction grating according to the present invention and the method of manufacturing a diffraction grating, a diffraction grating pattern is formed on a substrate by mechanically cutting or semiconductor processing (photolithography, etching), and the pattern is transferred onto a heat-shrinkable resin and is caused to shrink. Therefore, it is possible to fabricate a diffraction grating having a microstructure, which is difficult to fabricate by machining or using semiconductor processing. By combining microstructures, it is possible to improve the diffraction efficiency, and to improve the analysis device sensitivity.

Furthermore, by transferring the diffraction grating pattern onto the heat-shrinkable resin and causing the resin to shrink, it is possible to fabricate an optical element with a less warped substrate. Furthermore, because intermolecular shrinkage occurs by keeping the resin at a certain temperature, the shrinkage factor can be adjusted, and optical elements with small variations in the diffraction grating patterns can be achieved.

In FIGS. 8 to 11, the diffraction grating pattern having a substantially oval profile is illustrated, but it is also possible to manufacture a grating pattern having ridges with a substantially rectangular profile or a sawtooth-shaped profile, using the same manufacturing method.

The concave diffraction grating 2 illustrated in FIG. 5 can be manufactured by mounting the metal mold 33 illustrated in FIGS. 9 and 11 on a convex substrate, and transferring the pattern on the metal mold onto a concave substrate.

Note that the present invention is not limited to the embodiments described above, and includes various modifications thereof. For example, the embodiments have been described in detail to facilitate understanding of the present invention, and are not necessarily limited to those having all of the configurations described above. Furthermore, a part of the configuration according to one embodiment may be replaced with a configuration according to another embodiment, and a configuration according to another embodiment may be added to the configuration of the one embodiment. In addition, another configuration may be added to, deleted from, and replaced with a part of the configuration according to each of the embodiments.

### Reference Signs List

- 1: analysis device
- 2: diffraction grating
- 11: light source
- 12a, 12b, 12c: lens
- 13: specimen chamber
- 14: slit
- 15: detector
- 20: transparent resin
- 21: ridges with a substantially oval profile
- 22: ridges with a substantially rectangular profile
- 23: ridges with a sawtooth-shaped profile
- 24: grating grooves
- 25: concave substrate
- 30: diffraction grating substrate
- 31: heat-shrinkable resin
- 32: shrunk diffraction grating substrate
- 33: metal mold
- 34: metal film
- 35: resin
- 36: base

## Claims

1. A diffraction grating to be mounted on an analysis device, wherein a diffraction grating pattern formed on a substrate is transferred onto a heat-shrinkable resin, the heat-shrinkable resin is heated and caused to shrink, and the diffraction grating pattern on the heat-shrinkable resin thus shrunk is transferred onto a transparent resin or a metal film.

2. The diffraction grating according to claim 1, wherein
the heat-shrinkable resin is a resin formed by uniaxial stretching.

3. The diffraction grating according to claim 1, wherein the diffraction grating pattern on the substrate is transferred onto the heat-shrinkable resin by applying a solvent to the diffraction grating pattern on the substrate, and by bringing the heat-shrinkable resin into contact and by applying a load.

4. The diffraction grating according to claim 1, wherein the diffraction grating pattern on the heat-shrinkable resin is transferred onto the transparent resin by applying a solvent to the diffraction grating pattern on the heat-shrinkable resin, and by bringing the transparent resin into contact and by applying a load.

5. The diffraction grating according to claim 1, wherein diffraction grating comprises a metal film onto which the diffraction grating pattern has been transferred, a base that supports the metal film to which the diffraction grating pattern has been transferred, and a resin that fixes the metal film to which the diffraction grating pattern has been transferred, to the base.

6. The diffraction grating according to claim 1, wherein the diffraction grating has a grating width of 40 nm or less.

7. The diffraction grating according to claim 1, wherein a ridge profile is any one of a substantially oval profile, a substantially rectangular profile, and a sawtooth-shaped profile.

8. A diffraction grating to be mounted on an analysis device, wherein a diffraction grating pattern on a substrate is transferred onto a heat-shrinkable resin, the heat-shrinkable resin is heated and caused to shrink, a mold is formed by transferring the diffraction grating pattern on the heat-shrinkable resin thus shrunk is onto a metal, and the diffraction grating pattern on the mold is transferred onto a transparent resin or a metal film.

9. The diffraction grating according to claim 8, wherein
the heat-shrinkable resin is a resin formed by uniaxial stretching.

10. The diffraction grating according to claim 8, wherein the diffraction grating pattern on the mold is transferred onto the transparent resin by applying a solvent to the metal mold, and by bringing the transparent resin into contact and applying a load, or by heating a surface of the transparent resin and bringing the metal mold into contact and applying a load.

11. The diffraction grating according to claim 8, wherein diffraction grating comprises a metal film onto which the diffraction grating pattern has been transferred, a base that supports the metal film onto which the diffraction grating pattern has been transferred, and a resin that fixes the metal film onto which the diffraction grating pattern has been transferred, to the base.

12. The diffraction grating according to claim 8, wherein
the metal mold is bonded to a curved substrate, and transferred onto the transparent resin or the metal film.

13. The diffraction grating according to claim 8, wherein the diffraction grating has a grating width of 40 nm or less.

14. The diffraction grating according to claim 8, wherein a ridge profile is any one of a substantially oval profile, a substantially rectangular profile, and a sawtooth-shaped profile.

15. An analysis device comprising the diffraction grating according to any one of claims 1 to 14.

16. A method for manufacturing a diffraction grating, the method comprising:
a step (a) of forming a diffraction grating pattern on a substrate;
a step (b) of dissolving a surface of a heat-shrinkable resin using a first solvent, and transferring the diffraction grating pattern on the substrate to the surface of the heat-shrinkable resin by bringing the diffraction grating pattern on the substrate into contact with and applying a load to the dissolved surface of the heat-shrinkable resin;
a step (c) of peeling off the diffraction grating pattern on the substrate from a surface of the heat-shrinkable resin;
a step (d) of heating and shrinking the heat-shrinkable resin having the surface onto which the diffraction grating pattern on the substrate has been transferred;
a step (e) of dissolving a surface of a transparent resin in a second solvent, and transferring the diffraction grating pattern on the heat-shrinkable resin onto the surface of the transparent resin by bringing a diffraction grating pattern on the heat-shrinkable resin into contact with the dissolved surface of the transparent resin and applying a load; and
a step (f) of peeling off the diffraction grating pattern on the heat-shrinkable resin from the surface of the transparent resin.

17. A method for manufacturing a diffraction grating, the method comprising:
a step (a) of forming a diffraction grating pattern on a substrate;
a step (b) of dissolving a surface of a heat-shrinkable resin using a first solvent, and transferring the diffraction grating pattern on the substrate to the surface of the heat-shrinkable resin by bringing the diffraction grating pattern on the substrate into contact with and applying a load to the dissolved surface of the heat-shrinkable resin;
a step (c) of peeling off the diffraction grating pattern on the substrate from a surface of the heat-shrinkable resin;
a step (d) of heating and shrinking the heat-shrinkable resin having the surface onto which the diffraction grating pattern on the substrate has been transferred;
a step (e) of plating the diffraction grating pattern on the heat-shrinkable resin;
a step (f) of peeling off a metal mold formed at the step (e) from the diffraction grating pattern on the heat-shrinkable resin;
a step (g) of dissolving a surface of a transparent resin in a second solvent, and transferring the diffraction grating pattern on the metal mold onto the surface of the transparent resin by bringing a diffraction grating pattern on the metal mold into contact with the dissolved surface of the transparent resin and applying a load; and
a step (h) of peeling off the diffraction grating pattern on the metal mold from the surface of the transparent resin.

## Amended claims

### Amended claims under Art. 19.1 PCT

1. A method for manufacturing a diffraction grating, the method comprising:
a step (a) of forming a diffraction grating pattern on a substrate;
a step (b) of transferring the diffraction grating pattern on the substrate formed in the step (a) to a heat-shrinkable resin formed by uniaxial stretching;
a step (c) of heating the heat-shrinkable resin and causing the heat-shrinkable resin to shrink by keeping the heat-shrinkable resin at a constant temperature; and
a step (d) of transferring the diffraction grating pattern on the heat-shrinkable resin shrunk in the step (c) onto a transparent resin or a metal film.

2. The method according to claim 1, wherein, in the step (b), the diffraction grating pattern on the substrate is transferred onto the heat-shrinkable resin by applying a solvent to the diffraction grating pattern on the substrate, and by bringing the heat-shrinkable resin into contact and by applying a load.

3. The method according to claim 1, wherein, in the step (d), the diffraction grating pattern on the heat-shrinkable resin is transferred onto the transparent resin by applying a solvent to the diffraction grating pattern on the heat-shrinkable resin, and by bringing the transparent resin into contact and by applying a load.

4. The method according to claim 1, wherein the diffraction grating includes a metal film onto which the diffraction grating pattern has been transferred, a base that supports the metal film onto which the diffraction grating pattern has been transferred, and a resin that fixes the metal film onto which the diffraction grating pattern has been transferred, to the base.

5. The method according to claim 1, wherein the diffraction grating has a grating width of 40 nm or less.

6. The method according to claim 1, wherein the diffraction grating has a ridge profile of any one of a substantially oval profile, a substantially rectangular profile, and a sawtooth-shaped profile.

7. A method for manufacturing a diffraction grating, comprising:
a step (a) of forming a diffraction grating pattern on a substrate;
a step (b) of transferring the diffraction grating pattern on the substrate formed in the step (a) to a heat-shrinkable resin formed by uniaxial stretching;
a step (c) of heating the heat-shrinkable resin and causing the heat-shrinkable resin to shrink by keeping the heat-shrinkable resin at a constant temperature;
a step (d) of forming a mold by transferring the diffraction grating pattern on the heat-shrinkable resin shrunk in the step (c) to metal; and
a step (e) of transferring the diffraction grating pattern on the mold to a transparent resin or a metal film.

8. The method according to claim 7, wherein, in the step (e), the diffraction grating pattern on the mold is transferred onto the transparent resin by applying a solvent to the metal mold, and by bringing the transparent resin into contact and applying a load, or by heating a surface of the transparent resin and bringing the metal mold into contact and applying a load.

9. The method according to claim 7, wherein the diffraction grating includes a metal film onto which the diffraction grating pattern has been transferred, a base that supports the metal film onto which the diffraction grating pattern has been transferred, and a resin that fixes the metal film onto which the diffraction grating pattern has been transferred, to the base.

10. The method according to claim 7, wherein, in the step (e), the metal mold is bonded to a curved substrate, and transferred onto the transparent resin or the metal film.

11. The method according to claim 7, wherein the diffraction grating has a grating width of 40 nm or less.

12. The method according to claim 7, wherein the diffraction grating has a ridge profile of any one of a substantially oval profile, a substantially rectangular profile, and a sawtooth-shaped profile.

13. An analysis device comprising the diffraction grating manufactured by the method according to any one of claims 1 to 12.

14. A method for manufacturing a diffraction grating, the method comprising:
a step (a) of forming a diffraction grating pattern on a substrate;
a step (b) of dissolving a surface of a heat-shrinkable resin formed by uniaxial stretching using a first solvent, and transferring the diffraction grating pattern on the substrate to the surface of the heat-shrinkable resin by bringing the diffraction grating pattern on the substrate into contact with and applying a load to the dissolved surface of the heat-shrinkable resin;
a step (c) of peeling off the diffraction grating pattern on the substrate from a surface of the heat shrinkable resin;
a step (d) of shrinking the heat-shrinkable resin to the surface of which the diffraction grating pattern on the substrate has been transferred, by heating and keeping the heat-shrinkable resin at a certain temperature;
a step (e) of dissolving a surface of a transparent resin in a second solvent, and transferring the diffraction grating pattern on the heat-shrinkable resin onto the surface of the transparent resin by bringing a diffraction grating pattern on the heat-shrinkable resin into contact with and applying a load to the dissolved surface of the transparent resin ; and
a step (f) of peeling off the diffraction grating pattern on the heat-shrinkable resin from the surface of the transparent resin.

15. A method for manufacturing a diffraction grating, the method comprising:
a step (a) of forming a diffraction grating pattern on a substrate;
a step (b) of dissolving a surface of a heat-shrinkable resin formed by uniaxial stretching using a first solvent, and transferring the diffraction grating pattern on the substrate to the surface of the heat-shrinkable resin by bringing the diffraction grating pattern on the substrate into contact with and applying a load to the dissolved surface of the heat-shrinkable resin;
a step (c) of peeling off the diffraction grating pattern on the substrate from a surface of the heat shrinkable resin;
a step (d) of shrinking the heat-shrinkable resin to the surface of which the diffraction grating pattern on the substrate has been transferred, by heating and keeping the heat-shrinkable resin at a certain temperature;
a step (e) of plating the diffraction grating pattern on the heat-shrinkable resin;
a step (f) of peeling off a metal mold formed at the step (e) from the diffraction grating pattern on the heat-shrinkable resin;
a step (g) of dissolving a surface of a transparent resin in a second solvent, and transferring the diffraction grating pattern on the metal mold onto the surface of the transparent resin by bringing a diffraction grating pattern on the metal mold into contact with and applying a load to the dissolved surface of the transparent resin; and
a step (h) of peeling off the diffraction grating pattern on the metal mold from the surface of the transparent resin.
